# EUROPÄISCHE PATENTSCHRIFT

(11) **EP 0 660 918 B1**
(45) Veröffentlichungstag und Bekanntmachung des Hinweises auf die Patenterteilung: **19.03.1997**
(21) Anmeldenummer: 93918980.9
(22) Anmeldetag: 13.09.1993
(51) Int. Cl.: G01B 9/02

(54) **INTERFEROMETRISCHES MESSVERFAHREN SOWIE FÜR SEINE DURCHFÜHRUNG GEEIGNETE LASERINTERFEROMETERANORDNUNG**
INTERFEROMETRIC MEASUREMENT PROCESS AND LASER INTERFEROMETER THEREFOR
PROCEDE DE MESURE INTERFEROMETRIQUE ET INTERFEROMETRE LASER CONVENANT A SA MISE EN UVRE

(30) Priorität: 14.09.1992 DE 4230748
(43) Veröffentlichungstag der Anmeldung: 05.07.1995
(73) Patentinhaber: JOHANNES HEIDENHAIN GmbH, D-83301 Traunreut (DE); FRAUNHOFER-GESELLSCHAFT ZUR FÖRDERUNG DER ANGEWANDTEN FORSCHUNG E.V., 80636 München (DE)
(72) Erfinder: HANTEL, Peter, D-61352 Bad Homburg (DE); THIEL, Jürgen, D-52074 Aachen (DE)
(74) Vertreter: König, Werner, Dipl.-Ing.
(86) Internationale Anmeldenummer: DE9300843
(87) Internationale Veröffentlichungsnummer: WO9407109

(56) Entgegenhaltungen:
- EP-A- 0 284 304
- EP-A- 0 290 789
- EP-A- 0 401 576
- DE-A- 3 930 273

## Beschreibung

Die Erfindung betrifft ein interferometrisches Meßverfahren, insbesondere zur Längenmessung mittels eines Lasers. bei dem im Betriebszustand eines Meßinterferometers die Laserwellenlänge in der Weise geregelt wird, daß sich das mit der Laserwellenlänge in Form einer Welle periodisch ändernde Ausgangssignal eines Regelinterferometers innerhalb einer Wellenperiode auf einen Wert beispielsweise im Bereich einer Wellenflanke einstellt und Änderungen des Betriebszustandes des Meßinterferometers, d.h. der Laserfrequenz und/oder der Wellenlänge des Laserstrahls, in der Regelstrecke des Regelinterferometers erfaßt und über den Betriebsstrom und/oder die Temperatur des Lasers mit entsprechender Wirkung für das Meßinterferometer kompensiert werden. Eine für seine Durchführung geeignete Laserinterferometeranordnung ist bekannt aus beispielsweise EP-A-0 401 576 und ausgestattet mit einem in einem vorgegebenen Wellenlängenbereich modensprungfrei und kontinuierlich durchstimmbaren Laser, einem ersten Meß- und einem ersten Regelinterferometer mit ,jeweils einer Meß- bzw. Regelstrecke, wobei die Interferometerarme des Regelinterferometers eine konstante Längendifferenz zueinander aufweisen, weiter mit einem Primärstrahlteiler zur Aufspaltung des einfallenden Laserstrahls, wodurch die Interferometer von der Strahlung desselben Lasers beaufschlagt werden, wobei das Meßinterferometer zur Bildung von mindestens zwei miteinander interferierenden Teilstrahlen wenigstens einen ersten nichtpolarisierenden Strahlteiler, zwei Retroreflektoren oder anstelle davon z.B. einen oder mehrere Spiegel oder 90°-Prismen aufweist, ferner mit Mitteln zur Erzeugung von jeweils gegeneinander phasenverschobenen Strahlkomponenten für die Richtungserkennung von Längenänderungen der Meßstrecke, wie z.B. Lambda/4- oder Lambda/8-Platten sowie Mitteln zur Trennung der phasenverschobenen Strahlkomponenten, wie z.B. polarisierende Strahlteiler oder Wollaston-Prismen und mit wenigstens einem Photodetektor zur Erfassung des Interferenzsignals. und wobei das Regelinterferometer zur Bildung von mindestens zwei miteinander interferierenden Teilstrahlen wenigstens einen ersten Strahlteiler, zwei Retroreflektoren oder anstelle davon z.B. einen oder mehrere Spiegel oder 90°-Prismen sowie wenigstens einen Photodetektor zur Erfassung des Interferenzsignals hat, schließlich mit einer Regelungseinrichtung für die Laserwellenlänge.

Bei Interferometern der eingangs genannten Art werden zunehmend modensprungfrei durchstimmbare Halbleiterlaser eingesetzt. Ein Grund dafür sind besonders die relativ geringen Stückkosten für Laserdioden im Vergleich mit herkömmlichen Laserquellen. Darüberhinaus sind aber gerade Laserdioden gegenüber z.B. Helium-Neonlasern in einem um etwa zwei Größenordnungen breiteren Wellenlängenbereich kontinuierlich durchstimmbar. Demgegenüber haben jedoch Halbleiterlaser den Nachteil, daß ihre Resonanzwellenlänge stark von den Betriebsparametern der Laserdiode abhängt, wodurch die Laserwellenlänge zeitlichen Schwankungen unterworfen ist. Daneben können auch Schwankungen der Luftwellenlänge in der Meß- bzw. Regelstrecke dadurch auftreten, daß der Laserstrahl streckenweise frei durch Luft geführt wird, deren Brechungsindex ebenfalls Schwankungen, beispielsweise infolge einer Änderung der Umgebungstemperatur. der Luftfeuchtigkeit oder des CO₂-Gehaltes der Luft unterworfen sein kann.

Dieser Problematik wird bei dem aus der DE-PS 3 404 963 bereits bekannten Halbleiterlaser-Interferometer dadurch begegnet, daß neben dem eigentlichen Meßinterferometer ein weiteres Interferometer zur Regelung der Luftwellenlänge Verwendung findet. Dieses sogenannte Regelinterferometer ist derart ausgebildet, daß die Interferometerarme eine konstante Längendifferenz zueinander aufweisen. Sowohl das Meß- als auch das Regelinterferometer werden von der Strahlung derselben Laserdiode beaufschlagt. Ändert sich nun die Luftwellenlänge innerhalb der Meßstrecke des Regelinterferometers (im folgenden als "Regelstrecke" bezeichnet), beispielsweise aufgrund von Brechungsindexschwankungen des durchstrahlten Mediums oder Wellenlängenschwankungen der Laserdiode selbst, so ändern sich die Intensitäten der beiden phasenverschobenen Ausgangssignale des Regelinterferometers. Die Ausgangssignale werden mit Hilfe eines Reglers, der die Laserwellenlänge mittels des Stromes oder der Temperatur der Laserdiode verändert, auf konstanter Intensität gehalten, was im einfachsten Fall dadurch realisierbar ist, daß die Differenz der beiden Ausgangssignale auf den Wert Null geregelt wird. Da aufgrund der räumlichen Anordnung von Meß- und Regelstrecke angenommen werden kann, daß ihre Umgebungsbedingungen nahezu identisch sind, werden hierdurch ebenso die eigentlich interessierenden Schwankungen der Luftwellenlänge in der Meßstrecke kompensiert.

Das Differenzsignal ändert sich periodisch mit der Laser- bzw. Luftwellenlänge, so daß beim Einschalten des Lasers gewährleistet sein muß, daß diese Wellenlänge innerhalb des Bereichs liegt, der dieser Periode entspricht. Ist dies nicht der Fall, so wird auf eine andere Wellenlänge geregelt. Die Periode des Differenzsignals wird mit länger werdender Regelstrecke kleiner, so daß der zulässige Bereich der Wellenlänge der Laserdiode beim Einschalten kleiner wird. Da jedoch die Luftwellenlänge empfindlich von den Luftparametern Temperatur und Druck abhängig ist, darf - um das Erreichen einer bestimmten Periode des Differenzsignals sicherzustellen - die Regelstrecke nicht länger als ca. 2 cm sein, falls eine Temperaturdifferenz der Umgebungsluft von ±5° C zugelassen wird. Zudem ist durch plötzliche starke Änderungen des Brechungsindexes der Luft, beispielsweise aufgrund von Luftströmungen, die Gefahr gegeben, daß sich die Wellenlänge derart ändert, daß das Differenzsignal in eine benachbarte Interferenzordnung überspringt und demnach das Regelinterferometer auf eine andere Wellenlänge regelt. Andererseits ist aber auch gerade eine größere Regelstreckenlänge erwünscht, da die Empfindlichkeit der Wellenlängenregelung mit der Länge der Regelstrecke zunimmt.

Aus dieser Problematik leitet sich nun die Aufgabe der vorliegenden Erfindung ab, nämlich ein interferometrisches Meßverfahren zu realisieren, die gleichzeitig die Eindeutigkeit der Luftwellenlänge beim Einschalten gewährleistet sowie eine möglichst empfindliche Regelung mit einer relativen Unsicherheit von 10⁻⁸ zuläßt, welche zudem ein überspringen auf benachbarte Regelpunkte erkennt.

Diese Aufgabe wird bei einem Verfahren der eingangs bezeichneten Gattung dadurch gelöst, daß wenigstens zwei Regelinterferometer mit voneinander abweichenden Regelstrekkenlängen eingesetzt werden, wobei beispielsweise im Bereich der Wellenflanken der Regelinterferometer zwei obere sowie zwei untere Signalschwellen gesetzt werden, und daß beim Überschreiten einer ersten oberen oder beim Unterschreiten einer ersten unteren Signalschwelle auf das nächstfolgende Regelinterferometer mit der kürzeren Regelstrecke umgeschaltet wird, sofern nicht das Regelinterferometer mit der kürzesten Regelstrecke bereits aktiv ist, und daß beim Unterschreiten einer zweiten kleineren oberen Signalschwelle oder Überschreiten einer zweiten größeren unteren Signalschwelle auf das nächstfolgende Regelinterferometer mit der längeren Regelstrecke umgeschaltet wird, sofern nicht das Regelinterferometer mit der längsten Regelstrecke bereits aktiv ist. Im allgemeinen ist das Regelinterferometer mit der kürzesten Regelstrecke beim Einschaltvorgang aktiv, um dabei die Eindeutigkeit der Luftwellenlänge zu gewährleisten, dagegen wird mittels des Regelinterferometers mit der längsten Regelstrecke die empfindlichste Wellenlängenregelung mit der höchsten Wellenlängenstabilität durchgeführt.

Die Länge der kürzesten Regelstrecke richtet sich dabei zum einen nach der Größe der zugelassenen Brechungsindexänderung beim Einschalten und zum anderen nach der Genauigkeit, mit der die Laserwellenlänge über die Betriebsparameter der Laserquelle reproduzierbar eingestellt werden kann. Die Regelung kann beispielsweise derart durchgeführt werden, daß beim Einschalten der Laserquelle die Luftwellenlänge in der Regelstrecke mit den Betriebsparametern der Laserquelle voreingestellt wird, so daß die einer bestimmten Luftwellenlänge entsprechende Periode des Differenzausgangssignals des derzeit aktiven Regelinterferometers getroffen wird und anschließend mittels des Reglers und der kürzesten Regelstrecke die Luftwellenlänge auf den exakten Wert nachgeregelt wird. Hierbei muß gewährleistet sein, daß die Luftwellenlänge innerhalb dieser bestimmten Periode des nächstlängeren Regelinterferometers liegt. Die Regelung wird nun gegebenenfalls sukzessive mittels geeigneter Umschalter von dem jeweils kürzeren auf das jeweils längere Regelinterferometer umgeschaltet, wodurch eine höhere Empfindlichkeit der Wellenlängenregelung bei gleichzeitig hoher Reproduzierbarkeit der Einschaltwellenlänge gewährleistet ist. Dieser abgestufte Prozeß wird entsprechend der Anzahl der verwendeten Regelinterferometer wiederholt, bis die Regelung mit dem Regelinterferometer mit der längsten Regelstrecke durchgeführt wird.

Eine Änderung des störungsfreien "Betriebszustandes", beispielsweise durch einen plötzlichen Luftstrom, bei der das Ausgangssignal des derzeit aktiven Regelinterferometers - zunächst nicht erfaßbar - in eine benachbarte Interferenzordnung überspringt, läßt sich nun dennoch dadurch detektieren, daß sich das Ausgangssignal des Regelinterferometers mit der jeweils kürzeren Regelstrecke ändert. Diese Änderung wird dazu benutzt, ein Überspringen auf benachbarte Interferenzordnungen zu erkennen, in dem eine obere und eine untere elektronische Signalschwelle derart gesetzt wird, daß bei Überschreiten der oberen bzw. Unterschreiten der unteren Schwelle die Regelung auf das Regelinterferometer umgeschaltet wird, welches den Sprung erkannt hat. Hierdurch wird gewährleistet, daß die ursprüngliche Wellenlänge wieder eingestellt wird. Wenn das Ausgangssignal des danach aktiven Regelinterferometers wieder im mittleren Bereich der Wellenflanke innerhalb der ersten bzw. zweiten Signalschwellen liegt, wird auf das Regelinterferometer mit der nächstlängeren Regelstrecke umgeschaltet. Im Falle von mehreren Regelinterferometern erfolgt dies sukzessive. Dies ermöglicht, insbesondere bei Verwendung mehrerer Interferometer, gleichzeitig sowohl eine hohe Reproduzierbarkeit der Luftwellenlänge beim Einschalten, und zwar auch bei stark veränderlichen Umgebungsbedingungen, als auch im Betriebszustand eine äußerst stabile Wellenlängenregelung aufgrund der höheren Empfindlichkeit des Regelinterferometers mit der längsten Regelstrecke. Ein Überspringen des Ausgangssignals des jeweils aktiven Interferometers auf andere Interferenzordnungen wird erkannt, so daß automatisch wieder die ursprüngliche Wellenlänge eingestellt wird. Hierdurch ist gewährleistet, daß das Meßinterferometer immer mit derselben Luftwellenlänge mißt, auch wenn sich der Brechungsindex der Luft verändert.

Das erfindungsgemäße Meßverfahren kann auch in der Weise ausgeführt werden, daß mittels des jeweils aktiven Regelinterferometers wenigstens zwei jeweils um π phasenverschobene und sich gegensinnig mit der Laserwellenlänge ändernde Ausgangssignale erzeugt werden, deren sich mit der Laserwellenlänge periodisch änderndes Differenzsignal innerhalb einer Wellenperiode z.B. auf den Wert Null geregelt wird. Gegenüber einem Betrieb des Ausgangssignals des jeweils aktiven Regelinterferometers im Bereich einer Wellenflanke wird die Reproduzierbarkeit und Genauigkeit dadurch erhöht, daß das Differenzsignal auf den genau definierten Wert Null geregelt wird. Die Phasenverschiebung von π führt automatisch dazu, daß sich die beiden Ausgangssignale des jeweils aktiven Regelinterferometers gegensinnig mit der Laserwellenlänge ändern und damit beispielsweise durch einen Spannungsoffset hervorgerufene Signaländerungen kompensiert werden.

Die für dieses Verfahren geeignete erfindungsgemäße Laserinterferometeranordnung zeichnet sich dadurch aus, daß wenigstens zwei bezüglich der Länge der Regelstrecke kaskadenartig gegeneinander abgestufte Regel interferometer vorgesehen sind, wobei wenigstens die Regelstrecke des Regelinterferometers mit der längsten Regelstrecke entsprechend den apparativen Gegebenheiten möglichst nahe an der Meßstrecke angeordnet ist und daß für das zweite und etwaige weitere Regelinterferometer je ein weiterer Strahlteiler oder Spiegel vorgesehen ist. Aufeinanderfolgende Regelinterferometer besitzen somit sich sukzessive ändernde Regelstreckenlängen, wobei das Regelinterferometer mit der längsten Regelstrecke die höchste Meßempfindlichkeit bietet, dagegen das Regelinterferometer mit der kürzesten Regelstrecke die Eindeutigkeit der Wellenperiode liefert. Durch eine möglichst nahe Anordnung der längsten Regelstrecke an der Meßstrecke ist eine höchstempfindliche Detektion von Brechungsindexschwankungen innerhalb der Meßstrecke gewährleistet. Der Aufbau des Meßinterferometers ist im übrigen bereits aus dem zitierten Stand der Technik bekannt. Durch die Verwendung weiterer Strahlteiler oder Spiegel ist gewährleistet, daß sowohl das Meßinterferometer als auch sämtliche Regelinterferometer von der Strahlung desselben Lasers beaufschlagt werden. Als Laser bietet sich hier insbesondere ein Halbleiterlaser an. Die kaskadenartig gegeneinander abgestuften Interferometerarme der Regelinterferometer weisen im übrigen eine konstante Längendifferenz zueinander auf.

Die Laserinterferometeranordnung kann weiter so ausgebildet sein, daß die maximale Länge Lₘₐₓ der kürzesten Regelstrecke sich aus der Laserwellenlänge Lambda, der relativen Stabilität des Lasers a und der Stabilität des Brechungsindexes der Luft β berechnet gemäß Lₘₐₓ < Lambda/[4(α+β)] und daß die Länge der längsten Regelstrecke maximal gleich der Meßstrecke ist. Die Stabilität des Lasers ist im wesentlichen bestimmt durch die Temperaturschwankungen und Alterungseinflüsse der Laserdiode. Die Brechungsindexschwankungen betreffen insbesondere den räumlichen Umgebungsbereich der Meßstrecke. Bei Werten von α = 5·10⁻⁵ und β = 5·10⁻⁵ (für Temperaturschwankungen von ±25° C) ergibt sich bei einer Laserwellenlänge von 780 nm beispielsweise eine maximale Länge der kürzesten Regelstrecke von ≤ 2 mm.

Die Laserinterferometeranordnung kann ferner so ausgebildet sein, daß die Regelstrecken untereinander ein Längenverhältnis zwischen 1 zu 5 und 1 zu 10 aufweisen. Bei diesen Längenverhältnissen ist zum einen gewährleistet, daß das sukzessive Umschalten von einem zum nächsten Regelinterferometer nicht zu einem Überspringen in benachbarte Wellenperioden führt. Zum anderen wird bereits durch eine Aufeinanderfolge von wenigen Interferometern ein relativ großer Empfindlichkeitsbereich abgedeckt, wobei in dem einen Extrem eine besonders hohe Empfindlichkeit gewährleistet ist, in dem anderen Extrem aber auch relativ starke Änderungen der Luft- bzw. Laserwellenlänge nicht zu einem überspringen in benachbarten Wellenperioden führen.

Die Laserinterferometeranordnung kann ferner so ausgebildet sein, daß zumindest die Regelstrecken auf einem Werkstoff mit einem niedrigen Ausdehnungskoeffizienten, beispielsweise der Glaskeramik Zerodur, CFK-Verbundwerkstoff oder anderen, angeordnet sind. Bekanntlich weisen die Interferometerarme der Regelinterferometer eine konstante Längendifferenz zueinander auf, und dienen ausschließlich dazu, Änderungen der Luft- bzw. Laserwellenlänge zu detektieren und durch eine Änderung der Laserwellenlänge als solche zu kompensieren. Da aber auch die Ausgangs-Interferenzsignale der Regel interferometer empfindlich von den jeweiligen Armlängen der Regelinterferometer abhängen, läßt sich durch diese Maßnahme eine derartige Beeinflussung nahezu ausschließen.

Die Laserinterferometeranordnung kann weiter so ausgebildet sein, daß zumindest die Regelstrecken auf einem Werkstoff, dessen Ausdehnungskoeffizient dem des zu vermessenden oder zu bearbeitenden Werkstückes und/oder der gesamten Meß- oder Bearbeitungseinrichtung entspricht, beispielsweise Stahl, angeordnet sind. Durch diese Maßnahme lassen sich beispielsweise temperaturbedingte Längenänderungen eines Werkstückes bereits während seiner Bearbeitung kompensieren.

Die Laserinterferometeranordnung kann ferner so ausgebildet sein, daß wenigstens zwei Meßinterferometer vorgesehen sind. Dabei kann die Anzahl der Meßinterferometer sogar größer sein als die der Regelinterferometer.

Die Laserinterferometeranordnung kann ferner so ausgebildet sein, daß wenigstens ein Teil der Anordnung als integrierte Optik ausgebildet ist. Aufgrund der ausschließlichen Verwendung von Standardbauteilen bei der Optik der Laserinterferometeranordnung bietet sich ferner die Möglichkeit, einen Teil dieser Bauelemente oder sogar sämtliche Bauteile als integrierte Optik anzuordnen.

Die Laserinterferometeranordnung kann ferner vorsehen, daß die Ankopplung der peripheren Geräte an die optischen Bauteile durch bekannte Lichtleiter, wie z.B. Lichtleiterfasern, erfolgt.

Die Laserinterferometeranordnung kann schließlich so ausgebildet sein, daß für die Meß- und die Regel interferometer ein gemeinsamer Interferometerstrahlteiler vorgesehen ist. Ein derartiger Strahlteiler läßt sich anstelle eines Primärstrahlteilers und gegebenenfalls weiterer Spiegel einsetzen und bietet die Möglichkeit, sämtliche oder zumindest einen Teil der Interferometer mit äußerst geringen Abständen voneinander anzuordnen, wobei der Primärstrahl des Lasers vor seinem Eintritt in die einzelnen Interferometer aufgeweitet wird. Beispielsweise lassen sich dadurch die Interferometer in einfacher Weise übereinander montieren.

Im folgenden Teil wird zur Erläuterung des erfindungsgemäßen Meßverfahrens sowie der für seine Durchführung geeigneten Laserinterferometeranordnung zunächst ein Ausführungsbeispiel der Laserinterferometeranordnung vorgestellt, anhand dessen danach das erfindungsgemäße Verfahren erläutert wird.

Im einzelnen zeigen:
- Fig. 1: eine Laserinterferometeranordnung mit einem Meß- und zwei Regelinterferometern und
- Fig. 2: Erläuterung des Meßverfahrens anhand der Differenzspannung der beiden Fotoempfänger zweier Regelstrecken.

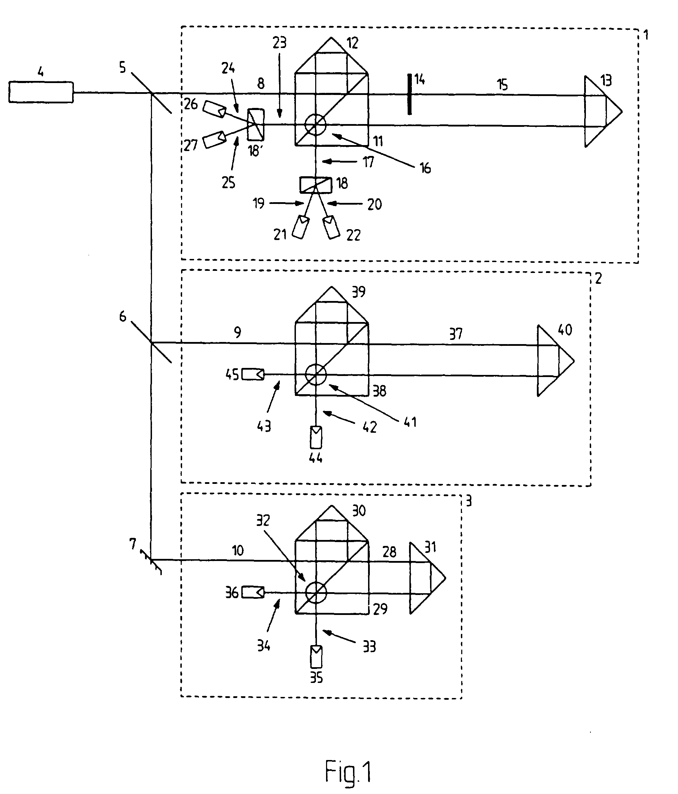

Fig. 1 zeigt eine Laserinterferometeranordnung mit einem Meßinterferometer 1 sowie zwei Regelinterferometern 2,3. Sämtliche Interferometer werden von der Strahlung einer Laserdiode 4 beaufschlagt, die über Primärstrahlteiler 5,6 und einen Spiegel 7 in Primärteilstrahlen 8,9,10 aufgespalten wird. Im übrigen können die Bauelemente 5,6,7 auch durch Beugungsgitter ersetzt werden.

Für den Betrieb der Laserdiode kann dabei eine schnelle Stromregelung, die im Bereich von mehreren kHz arbeitet, vorgesehen sein. Eine Anordnung von zwei Regelinterferometern stellt die einfachste Ausführungsform dar, es sind dagegen auch Anordnungen denkbar, bei denen mehr als zwei Regelinterferometer Verwendung finden.

Der Primärteilstrahl 8, der das Meßinterferometer 1 durchläuft, wird zunächst an einem Strahlteiler 11 in zwei interferenzfähige Teilstrahlen aufgeteilt, von denen der eine an einem Retroreflektor 12 durch mehrfache Umlenkung parallel zu seiner Einfallsrichtung zurückreflektiert wird, der andere dagegen an einem Retroreflektor 13, dessen variable Position die eigentlich zu messende Länge definiert, durch mehrfache Umlenkung ebenfalls parallel zurückreflektiert wird. Dieser zweite Teilstrahl durchläuft dann eine Lambda/4-Platte 14, nach deren Durchstrahlung dieser Teilstrahl in zwei z.B. um π/2 gegeneinander phasenverschobene Strahl- bzw. Polarisationskomponenten aufgespalten ist. Diese beiden Komponenten schaffen nun die Voraussetzungen für eine Erfassung der Bewegungsrichtung des Retroreflektors 13 relativ zu den übrigen Bauteilen des Meßinterferometere 1. Die in Punkt 16 wiedervereinten Teilstrahlen überlagern sich innerhalb der jeweiligen Teilstrecken 17,23 und bilden die eigentlichen Interferenzsignale. Das eine dieser Interferenzsignale durchläuft schließlich einen polarisierenden Strahlteiler 18, und zwar in diesem Beispiel ein Wollaston-Prisma (alternativ dazu könnte z.B. ein 90°-Teilerprisma verwendet werden oder z.B. ein nicht-polarisierender Strahlteiler mit nachfolgenden optischen Bauelementen, die eine Trennung der Polarisationskomponenten bewirken), wonach zwei weitere Teilstrahlen 19,20 gebildet werden, die jeweils mittels eines Fotoempfängers 21,22 detektiert werden. Die beiden Teilstrahlen 19,20 stellen dabei die unterschiedlichen Interferenzen der an der Lambda/4-Platte 14 erzeugten phasenverschobenen Signale mit dem zweiten Teilstrahl dar, die zur Richtungserkennung der Bewegung des Retroreflektors 13 benutzt werden.

Das zweite Interferenzsignal, das in der Teilstrecke 23 gebildet wird, durchläuft wiederum einen polarisierenden Strahlteiler 18', und zwar in diesem Beispiel ein Wollaston-Prisma oder alternativ dazu ein anderes polarisationsoptisches Bauelement, wonach wiederum die hierdurch aufgespaltenen beiden Teilstrahlen 24,25 durch Fotoempfänger 26,27 erfaßt werden.

Die in der Teilstrecke 17 enthaltenen Komponenten 19,20 sowie die in der Teilstrecke 23 enthaltenen Komponenten 24,25 weisen aufgrund der Phasenverschiebung durch die Lambda/4-Platte zueinander jeweils eine Phasenverschiebung von π/2 bezüglich der Intensität auf, sodaß an den Fotoempfängern 21,22,26,27 insgesamt vier Signale, die jeweils um π/2 phasenverschoben sind, zur Verfügung stehen. Mindestens zwei um π/2 phasenverschobene Signale sind für eine Richtungserkennung der Bewegungsrichtung des Retroreflektors 13 notwendig. Durch Differenzbildung der jeweiligen um π phasenverschobenen Ausgangssignale werden beispielsweise Offset-Schwankungen nahezu eliminiert.

Der Primärteilstrahl 10 durchläuft das Regelinterferometer 3, das von den beiden Regelinterferometern 2,3 die kürzere Regelstrecke 28 aufweist, deren Länge zudem konstant ist. Der Primärteilstrahl 10 wird durch einen Strahlteiler 29 in zwei interferenzfähige Teilstrahlen zerlegt, wobei ein Teilstrahl an einem Retroreflektor 30 reflektiert wird, der zweite Teilstrahl entsprechend an einem Retroreflektor 31. Die in Punkt 32 vereinten Teilstrahlen überlagern sich sowohl in dem Teilstück 33 als auch dem Teilstück 34 und bilden die eigentlichen Interferenzsignale des Regelinterferometers 3. Diese sind gegeneinander um π phasenverschoben und ändern sich gegensinnig mit der Laserwellenlänge. Die Interferenzsignale (=Ausgangssignale) werden mittels der Fotoempfänger 35,36 detektiert. Für eine besonders vorteilhafte Auswertung dieser Ausgangssignale ist es zweckmäßig, die um π phasenverschobenen, sich gegensinnig mit der Laserwellenlänge ändernden Ausgangssignale als Differenzsignal innerhalb einer Wellenperiode auf den Wert Null zu regeln.

Der Primärteilstrahl 9 durchläuft dagegen das Regelinterferometer 2 mit der in diesem Beispiel zweiten Regelstrecke 37, deren Länge ebenfalls konstant ist. Im Falle von n Regelinterferometern wäre dies jedoch die n-te Regelstrecke. Der Primärteilstrahl 9 wird durch einen Strahlteiler 38 in zwei interferenzfähige Teilstrahlen zerlegt, von denen der eine an einem Retroreflektor 39, der andere an eine Retroreflektor 40 rückreflektiert wird. Die in Punkt 41 vereinten Teilstrahlen interferieren in den Teilstücken 42,43 miteinander. Die beiden um π phasenverschobene Interferenzsignale werden ebenfalls von Fotoempfängern 44,45 erfaßt.

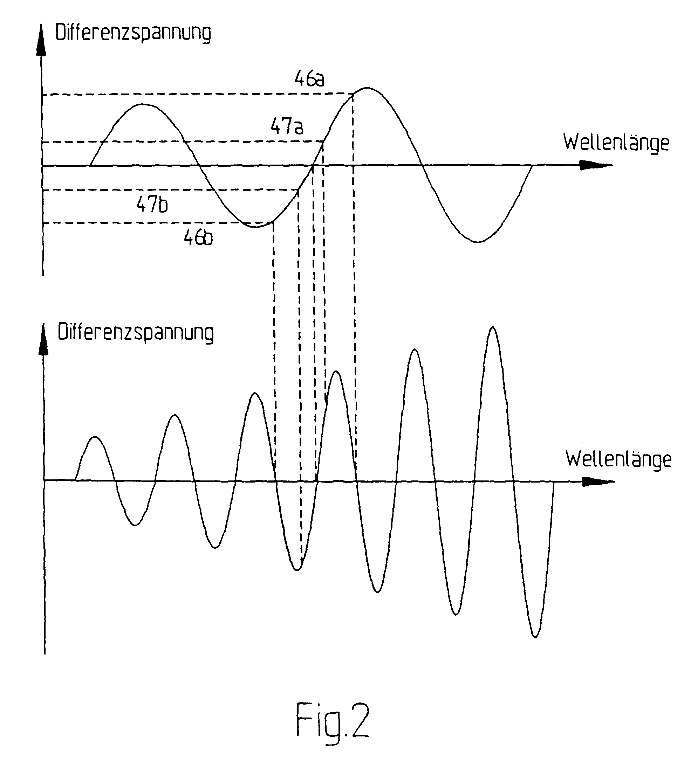

In Fig. 2 ist nun die Differenzspannung am Ausgang der beiden Fotodetektoren 35,36 bzw. 44,45 in Abhängigkeit von der Wellenlänge aufgetragen. Im oberen Bildteil ist die Differenzspannung der Fotoempfänger 35,36 des Regelinterferometers 3 mit der kürzeren Regelstrecke dargestellt, dagegen im unteren Teil die entsprechende Ausgangsspannung des Regelinterferometers 2 mit der längeren Regelstrecke 37. Die mit der Wellenlänge zunehmende Amplitude der Differenzspannung beruht auf der Leistungscharakteristik der Laserdiode.

Bei der im oberen Bildteil dargestellten Differenzspannung sind jeweils zwei obere 46a,47a bzw. zwei untere Schwellenspannungen 46b,47b eingezeichnet, die die jeweiligen Schaltpunkte definieren, bei denen auf das nächstfolgende Regelinterferometer mit der kürzeren bzw. längeren Regelstrecke umgeschaltet wird. Im Betriebszustand des Meßinterferometers 1 sei zunächst das Regelinterferometer 2 mit der längeren Regelstrecke 37 aktiv. Dabei erhielte man beispielsweise eine Differenzspannung gemäß dem unteren Bildteil in Fig. 2. Im Falle einer Änderung des Betriebszustandes, beispielsweise aufgrund von Schwankungen der Luftwellenlänge innerhalb der Regelstrecke 37, würde nun aufgrund des Überschreitens der oberen Schwellenspannung 47a oder alternativ dazu des Unterschreitens der unteren Schwellenspannung 47b auf das Regelinterferometer mit der nächstkürzeren Regelstrecke, demnach in diesem Beispiel auf das Regelinterferometer 3 umgeschaltet. Damit erhielte man nunmehr eine Ausgangsspannung entsprechend dem oberen Bildteil. Würde danach aufgrund der Regelung die obere Schwellenspannung 47a unterschritten oder alternativ dazu die untere Schwellenspannung 47b überschritten, dann würde wieder auf das Regelinterferometer mit der nächstlängeren Regelstrecke, hier also das Regelinterferometer 2 zurückgeschaltet. Im Falle des Überschreitens der oberen Schwellenspannung 46a bzw. des Unterschreitens der unteren Schwellenspannung 46b würde dagegen auf das Regelinterferometer mit der nächstkürzerern Regelstrecke (hier nicht dargestellt) umgeschaltet. Dieser Vorgang wiederholte sich bei jeder auftretenden Störung analog.

### Bezugszeichen

### Zur Vorrichtung

- 1: Meßinterferometer
- 2,3: Regelinterferometer
- 4: Laserdiode
- 5,6: Primärstrahlteiler
- 7: Spiegel
- 8,9,10: Primärteilstrahl
- 11: Strahlteiler
- 12,13: Retroreflektor
- 14: Lambda/4-Platte
- 15: Meßstrecke
- 16: Vereinigungspunkt der interferierenden Teilstrahlen
- 17: Teilstrecke (Interferenz)
- 18,18': polarisierender Strahlteiler
- 19,20: phasenverschobener Teilstrahl
- 21,22: Fotoempfänger
- 23: Teilstrecke (Interferenz)
- 24,25: phasenverschobener Teilstrahl
- 26,27: Fotoempfänger
- 28: erste Regelstrecke
- 29: Strahlteiler
- 30,31: Retroreflektor
- 32: Vereinigungspunkt der interferierenden Teilstrahlen
- 33,34: Teilstrecke (Interferenz)
- 35,36: Fotoempfänger
- 37: 2. bzw. n-te Regelstrecke
- 38: Strahlteiler
- 39,40: Retroreflektor
- 41: Vereinigungspunkt der interferierenden Teilstrahlen
- 42,43: Teilstrecke (Interferenz)
- 44,45: Fotoempfänger

### Zum Meßverfahren

- 46a,47a: obere Schwellenspannungen
- 46b,47b: untere Schwellenspannungen

## Patentansprüche

1. Interferometrisches Meßverfahren, insbesondere zur Längenmessung, bei dem ein in einem vorgegebenen Wellenlängenbereich modensprungfrei und kontinuierlich durchstimmbarer Laser verwendet wird, bei dem im Betriebszustand eines Meßinterferometers (1) die Laserwellenlänge (Luftwellenlänge) in der Weise geregelt wird, daß sich das mit der Laserwellenlänge in Form einer Welle periodisch ändernde Ausgangssignal eines Regelinterferometers (2) innerhalb einer Wellenperiode auf einen vorgegebenen Wert einstellt
und Änderungen des Betriebszustandes des Meßinterferometers (1) und damit der Wellenlänge des Laserstrahls in der Regelstrecke (28,37) des Regelinterferometers (2) erfaßt und über den Betriebsstrom und/oder die Temperatur des Lasers (4) mit entsprechender Wirkung für das Meßinterferometer (1) kompensiert werden, und
bei dem wenigstens zwei Regelinterferometer (2,3) mit voneinander abweichenden Regelstreckenlängen (28,37) eingesetzt werden,
**dadurch gekennzeichnet,**
daß zwei obere (46a,47a) sowie zwei untere Signalschwellen (46b,47b) gesetzt werden,
und daß beim Überschreiten einer ersten oberen (46a) oder beim Unterschreiten einer ersten unteren Signalschwelle (46b) auf das nächstfolgende Regelinterferometer mit der kürzeren Regelstrecke umgeschaltet wird, sofern nicht das Regelinterferometer mit der kürzesten Regelstrecke bereits aktiv ist,
und daß beim Unterschreiten einer zweiten kleineren oberen Signalschwelle (47a) oder Überschreiten einer zweiten größeren unteren Signalschwelle (47b) auf das nächstfolgende Regelinterferometer mit der längeren Regelstrecke umgeschaltet wird, sofern nicht das Regelinterferometer mit der längsten Regelstrecke bereits aktiv ist.

2. Verfahren nach Anspruch 1, dadurch gekennzeichnet,
daß mittels des jeweils aktiven Regelinterferometers (2,3) wenigstens zwei jeweils um π phasenverschobene und sich gegensinnig mit der Laserwellenlänge ändernde Ausgangssignale erzeugt werden,
deren sich mit der Laserwellenlänge periodisch änderndes Differenzsignal innerhalb einer Wellenperiode z.B. auf den Wert Null geregelt wird.

3. Verfahren nach Anspruch 1 oder 2, dadurch gekennzeichnet,
daß wenigstens drei Regelinterferometer (2,3) mit voneinander abweichenden Regelstrecken (28,37) eingesetzt werden und
daß die Umschaltung auf das jeweils nächstfolgende Regelinterferometer mit der nächstlängeren Regelstrecke sukzessive so oft erfolgt, bis das Regelinterferometer mit der längsten Regelstrecke aktiv ist.

## Claims

1. Interferometric measurement process, in particular for length measurement, using a laser being mode jump-free and continuously tunable in a preset wavelength area,
whereby when a measuring interferometer (1) is in operational state the laser wavelength is controlled by virtue of the fact that the output signal of a regulating interferometer (2), which changes periodically with the laser wavelength in the form of a wave, adjusts within a wave period to a preset value,
and changes in the operational state of the measuring interferometer (1) and thus of the wavelength of the laser beam, are detected in the regulating section (28,37) of the regulating interferometer (2) and compensated via the operating current and/or the temperature of the laser (4), with a corresponding effect on the measuring interferometer (1),
and with which at least two regulating interferometers (2,3) with regulating sections (28,37) of different lengths are employed,
**charaterized**
in that two upper (46a,47a) and two lower signal thresholds (46b,47b) are set,
and in that the system switches to the next regulating interferometer with a shorter regulating section, upon the signal exceeding an initial upper signal threshold (46a) or falling below an initial lower signal threshold (46b), unless the regulating interferometer with the shortest regulating section is already active,
and in that the system switches to the next regulating interferometer with a longer regulating section, upon the signal falling below a second smaller upper signal threshold (47a) or exceeding a second greater lower signal threshold, unless the regulating interferometer with the longest regulating section is already active.

2. Process in accordance with Claim 1, characterised in that
at least two output signals with a relatively phase displacement of π are generated by means of the currently active regulating interferometer (2,3), whereby these output signals alter inversely with the laser wavelength
and the differential signal of these output signals, which changes periodically with the the laser wavelength, is regulated within a wave period to a value of zero, for example.

3. Process in accordance with Claim 1 or 2, characterised in that at least three regulating interferometers (2,3) are used having regulating sections differing from each other, and
that switching to the regulating interferometer next to follow with the next longer regulating section successively happens so many times until the regulating section with the longest regulating section is active.

## Revendications

1. Procédé de mesure interférométrique, notamment pour la mesure de la longueur, dans lequel on utilise un laser variable continuellement et sans changement de mode dans une gamme de longueurs d'ondes prédéfinie, dans lequel la longueur d'onde du laser (longueur d'onde de l'air), lorsque l'interféromètre de mesure (1) est en état de fonctionnement, est régulée de telle façon que le signal de sortie d'un interféromètre de régulation (2) qui varie périodiquement avec la longueur d'onde du laser sous la forme d'une onde se règle à une valeur prédéfinie à l'intérieur d'une période du signal,
et les modifications de l'état de fonctionnement de l'interféromètre de mesure (1) et, de ce fait, de la longueur d'onde du rayon laser dans la section de régulation (28, 37) de l'interféromètre de régulation (2) sont détectées et compensées par le biais du courant de service et/ou de la température du laser (4) avec un effet correspondant sur l'interféromètre de mesure (1),
et dans lequel on utilise au moins deux interféromètres de régulation (2, 3) ayant des sections de régulation (28, 37) de longueurs différentes,
caractérisé par le fait
que l'on définit deux seuils supérieurs (46a, 47a) ainsi que deux seuils inférieurs (46b, 47b) du signal,
et qu'en cas de passage au-dessus d'un premier seuil supérieur (46a) ou qu'en cas de passage en dessous d'un premier seuil inférieur (46b) il se produit une commutation sur l'interféromètre de régulation ayant la section de régulation immédiatement inférieure, sous réserve que l'interféromètre de régulation ayant la section de régulation la plus courte ne soit pas déjà actif,
et qu'en cas de passage en dessous d'un deuxième seuil supérieur (47a) plus petit du signal ou de passage au-dessus d'un deuxième seuil inférieur (47b) plus grand du signal il se produit une commutation sur l'interféromètre de régulation suivant ayant la section de régulation immédiatement supérieure, sous réserve que l'interféromètre de régulation ayant la section de régulation la plus longue ne soit pas déjà actif.

2. Procédé selon la revendication 1, caractérisé par le fait
qu'au moins deux signaux de sortie déphasés à chaque fois de π et variant inversement à la longueur d'onde du laser sont générés à l'aide de l'interféromètre de régulation (2, 3) couramment actif,
le signal différentiel de ceux-ci variant périodiquement avec la longueur d'onde du laser à l'intérieur d'une période du signal est régulé à la valeur zéro, par exemple.

3. Procédé selon la revendication 1 ou 2, caractérisé par le fait
que l'on utilise au moins trois interféromètres de régulation (2, 3) ayant des sections de régulation (28, 37) de longueurs différentes
et que la commutation s'effectue à chaque fois sur l'interféromètre de régulation suivant ayant la section de régulation de longueur immédiatement supérieure de façon successive jusqu'à ce que l'interféromètre de régulation ayant la section de régulation la plus longue soit actif.
